# EUROPÄISCHE PATENTSCHRIFT

(11) **EP 3 526 507 B1**
(45) Veröffentlichungstag und Bekanntmachung des Hinweises auf die Patenterteilung: **02.12.2020**
(21) Anmeldenummer: 17783830.7
(22) Anmeldetag: 11.10.2017
(51) Int. Cl.: F16L 37/088

(54) **VERBINDER UND VERBINDERBAUGRUPPE UND VERFAHREN ZUR HERSTELLUNG EINES VERBINDERS**
CONNECTOR AND CONNECTOR ASSEMBLY AND METHOD FOR PRODUCING A CONNECTOR
CONNECTEUR, MODULE DE CONNECTEUR ET PROCÉDÉ PERMETTANT DE PRODUIRE UN CONNECTEUR

(30) Priorität: 14.10.2016 DE 102016119659
(43) Veröffentlichungstag der Anmeldung: 21.08.2019
(73) Patentinhaber: NORMA Germany GmbH, 63477 Maintal (DE)
(72) Erfinder: REUTER, Sven, 63755 Alzenau (DE); HERRMANN, Fabian, 63179 Obertshausen (DE)
(74) Vertreter: Patentanwälte Olbricht Buchhold Keulertz
(86) Internationale Anmeldenummer: PCT/EP2017/075912
(87) Internationale Veröffentlichungsnummer: WO 2018/069384

(56) Entgegenhaltungen:
- DE-C1- 10 017 679
- US-A- 3 453 005
- US-A1- 2014 070 531

## Beschreibung

Die Erfindung betrifft einen Verbinder für eine Fluidleitung und eine Verbindungsbaugruppe mit einem solchen Verbinder und einem Anschlussstutzen. Die Erfindung betrifft des Weiteren ein Verfahren zur Herstellung eines Verbinders.

Das Verbinden von Rohren, Schläuchen, Anschlussstutzen oder anderen Fluidleitungen ist zum Beispiel in der Automobilindustrie, der Versorgungsindustrie oder in der Lüftungstechnik erforderlich. Das Verbinden erfolgt mit einem Verbinder, der beispielsweise mit einer Fluidleitung einerseits und mit einem Anschlussstutzen andererseits fluiddicht verbunden werden kann.

Aus der US 20140070531 A1 ist ein Verbinder für eine Fluidleitung mit einem Verbindergehäuse bekannt, das einen sich von einer ersten Öffnung weg erstreckenden Fluidkanal aufweist. Im Bereich der ersten Öffnung ist eine Verriegelungsvorrichtung mit einem Verriegelungsgehäuse und einem Spannring vorgesehen, wobei das Verriegelungsgehäuse das Verbindergehäuse bezüglich des Fluidkanals in Umfangsrichtung so umschließt, dass zwischen dem Verbindergehäuse und dem Verriegelungsgehäuse ein die erste Öffnung konzentrisch umgebender Ringspalt zur Aufnahme eines im wesentlichen zylindrischen Anschlussstutzens gebildet ist. Der Spannring ragt mit zumindest einem Abschnitt elastisch federnd in diesen Ringspalt ein, wobei das Verriegelungsgehäuse ein vom Verbindergehäuse separates Bauteil ist, das zumindest in Längsrichtung des Fluidkanals im Bereich der ersten Öffnung am Verbindergehäuse gehalten ist.

Verbinder für eine Fluidleitung mit einem Verbindergehäuse sind auch aus der US 3 453 005 A und der DE 100 17 679 C1 bekannt.

Solche Verbindungen müssen definierte Anforderungen beispielsweise hinsichtlich ihrer Druckfestigkeit, Dichtheit, Temperaturbeständigkeit und/oder mechanischer Stabilität erfüllen. Diese Anforderungen können hinsichtlich der Sicherheit einer Anlage kritisch sein, insbesondere dann, wenn solche Verbindungen beispielsweise zum Anschluss von Kraftstofftanks oder in Kühlwasserkreisläufen von Kraftfahrzeugen verwendet werden. Des Weiteren ist eine einfache Handhabung des Verbinders gewünscht, um die Montagezeit zu verkürzen und um Fehlmontagen zu vermeiden.

Aufgabe der Erfindung ist es, einen Verbinder zum Anschluss einer Fluidleitung an einem Anschlussstutzen bereitzustellen, der eine einfache und schnelle Montage ermöglicht und erhöhte Anforderungen an die Druckfestigkeit und die Dichtigkeit des Anschlusses erfüllt. Aufgabe der Erfindung ist es des Weiteren, eine Verbinderbaugruppe mit einem solchen Verbinder und einem Anschlussstutzen bereitzustellen, die eine schnelle und zuverlässige Verbindung des Verbinders mit dem Anschlussstutzen ermöglicht, sowie ein Verfahren zur Herstellung eines Verbinders bereitzustellen.

Hauptmerkmale der Erfindung sind in den Ansprüchen 1, 12 und 14 angegeben. Ausgestaltungen sind Gegenstand der Ansprüche 2 bis 11, 13 sowie 15.

Zur Lösung der Aufgabe ist bei einem Verbinder für eine Fluidleitung mit einem Verbindergehäuse, das einen sich von einer ersten Öffnung weg erstreckenden Fluidkanal aufweist, im Bereich der ersten Öffnung eine Verriegelungsvorrichtung mit einem Verriegelungsgehäuse und einem Verriegelungselement vorgesehen. Das Verriegelungsgehäuse umschließt das Verbindergehäuse bezüglich des Fluidkanals in Umfangsrichtung so, dass zwischen dem Verbindergehäuse und dem Verriegelungsgehäuse ein zur ersten Öffnung offener, insbesondere in Umfangsrichtung umlaufender Ringspalt zur Aufnahme eines im Wesentlichen zylindrischen Anschlussstutzens gebildet ist. Das Verriegelungselement ragt mit zumindest einem Halteabschnitt elastisch federnd in den Ringspalt. Das Verriegelungsgehäuse ist ein vom Verbindergehäuse separates Bauteil, das zumindest in Längsrichtung des Fluidkanals im Bereich der ersten Öffnung am Verbindergehäuse fixiert ist.

Der Verbinder besteht also aus zumindest drei Bauteilen, einem Verbindergehäuse und zumindest einer Verriegelungsvorrichtung mit jeweils einem Verriegelungsgehäuse und einem Verriegelungselement. Da die Verriegelungsvorrichtung, insbesondere das Verriegelungsgehäuse, nicht Teil des Verbindergehäuses ist, kann diese separat hergestellt werden, wodurch die Herstellung der einzelnen Teile einfacher ist. Zudem kann die Verriegelungsvorrichtung separat an die jeweils benötigten Anforderungen angepasst und dimensioniert werden. Insbesondere kann die Verriegelungsvorrichtung aus anderen Materialien als das Verbindergehäuse hergestellt werden, so dass eine weitere Anpassung an die auftretenden Belastungen oder die gewünschten Anforderungen, beispielsweise eine Reduzierung des Gewichtes, erfolgen kann.

Auf der Außenseite des Verbindergehäuses ist erfindungsgemäß zumindest eine in Umfangsrichtung um das Verbindergehäuse umlaufende, radial nach außen vorstehende Dichtung vorgesehen, um den Verbinder und den Anschlussstutzen gegeneinander abzudichten. Die Dichtung ist im Ringspalt angeordnet und somit auch bei nicht eingeschobenem Anschlussstutzen sicher geschützt. Insbesondere ist die Dichtung in einer in Umfangsrichtung umlaufenden Nut angeordnet, so dass ein Verschieben in Längsrichtung sicher verhindert ist.

Das öffnungsseitige Ende des Verbindergehäuses kann in einer Ebene mit der ersten Öffnung des Verbinders liegen. Vorzugsweise liegen diese aber in verschiedenen Ebenen, so dass das öffnungsseitige Ende oder die erste Öffnung des Verbinders in Längsrichtung vorragt, wodurch das Einschieben des Anschlussstutzens vereinfacht sein könnte.

Der Ringspalt und die Verriegelungsvorrichtung sind vorzugsweise so ausgebildet, dass ein Aufschieben und Fixieren des Verbinders auf bisher verwendete Anschlussstutzen, die eine Haltegeometrie wie eine Vertiefung zur Aufnahme oder ein umlaufender Kragen zum Anlegen des Halteabschnitts des Verriegelungselements aufweisen, möglich ist.

Die Verbindung des Verriegelungsgehäuses kann auf verschiedene Weise erfolgen. Beispielsweise ist das Verriegelungsgehäuse über eine formschlüssige und/oder stoffschlüssige Verbindung am Verbindergehäuse fixiert. Eine formschlüssige Verbindung kann beispielsweise durch zusammenwirkende Vorsprünge oder Flansche am Verriegelungsgehäuse und am Verbindergehäuse erfolgen. Beispielsweise sind die Vorsprünge oder Flansche radial nach außen bzw. radial nach innen vorstehend ausgebildet. Durch eine solche Verbindung sind das Verriegelungsgehäuse und das Verbindergehäuse beispielsweise nur in Längsrichtung aneinander fixiert, so dass eine Drehung des Verriegelungsgehäuses, beispielsweise zur Ausrichtung des Verriegelungsgehäuses zu einem Anschlussstutzen, möglich ist.

Die Verbindung kann eine Verrastung sein, wobei am Verriegelungsgehäuse oder am Verbindergehäuse Rastlaschen vorgesehen sind und am Verbindergehäuse bzw. am Verriegelungsgehäuse Rastvorsprünge vorgesehen sind, an denen die Rastlaschen in Längsrichtung verrasten. Eine solche Verrastung ermöglicht eine werkzeuglose Befestigung des Verriegelungsgehäuses am Verbindergehäuse, so dass der Zusammenbau des Verbinders vereinfacht ist. Die Rastvorsprünge können durch einen in Umfangsrichtung umlaufenden Flansch gebildet sein.

Ergänzend können Mittel zur Festlegung des Verriegelungsgehäuses am Verbindergehäuse in Umfangsrichtung vorgesehen sein, so dass die Ausrichtung der Verriegelungsvorrichtung am Verbindergehäuse festgelegt ist. Insbesondere können die Mittel durch am Verriegelungsgehäuse und am Verbindergehäuse vorgesehene Verzahnungen gebildet sein, die beispielsweise bei der Montage des Verriegelungsgehäuses am Verbindergehäuse in Eingriff miteinander gelangen.

Das Verriegelungsgehäuse kann an einem der ersten Öffnung des Fluidkanals abgewandten Ende einen radial nach innen ragenden Kragen aufweisen, der insbesondere am Verbindergehäuse fixiert ist. Der Kragen schließt den Ringspalt in Längsrichtung und bildet so beispielsweise einen Anschlag für den Anschlussstutzen, so dass dieser nur soweit eingeschoben werden kann, dass sich die Haltegeometrie vor den Aussparungen befindet und die Halteabschnitte des Verriegelungselements mit der Haltegeometrie zusammenwirken können.

Der Ringspalt kann quer zur Längsrichtung eine konstante Breite aufweisen. Es ist aber auch möglich, dass der Ringspalt sich in Längsrichtung des Fluidkanals von der ersten Öffnung weg zumindest abschnittsweise verjüngt. Beispielsweise kann sich ein an die erste Öffnung unmittelbar anschließender Abschnitt verjüngen, wodurch eine Einführhilfe für den Anschlussstutzen gebildet ist. Es ist aber auch möglich, dass sich der Ringspalt im Bereich des Bodens des Ringspaltes verjüngt. Der Anschlussstutzen kann beim Einschieben in den sich verjüngenden Abschnitt geklemmt und/oder zentriert werden.

Vorzugsweise ist die dem Verbindergehäuse zugewandte Innenseite des Verriegelungsgehäuses zumindest abschnittsweise sich von der ersten Öffnung weg konisch verjüngend ausgebildet. Der Verbinder hat beispielsweise einen konstanten Außendurchmesser, wodurch dieser einfach herzustellen ist. Die konische Form des Ringspaltes wird nur durch die Form des separat herzustellenden Verriegelungsgehäuses bereitgestellt.

Das Verbindergehäuse ist beispielsweise zylindrisch und das Verriegelungselement ringförmig ausgebildet. Der Anschlussstutzen ist ebenfalls zylindrisch ausgebildet. Dadurch kann der Verbinder in beliebiger Orientierung mit dem Ringspalt in Längsrichtung auf den Anschlussstutzen aufgeschoben werden. Eine gewünschte Orientierung kann während oder auch nach dem Aufschieben durch Drehen des Verbinders um die Längsachse hergestellt werden. Dadurch ist insbesondere bei einem winklig ausgebildeten Verbinder die Montage des Verbinders am Anschlussstutzen vereinfacht.

Das Verriegelungselement ist vorzugsweise ein Bügel, der das Verriegelungsgehäuse zumindest abschnittsweise in Umfangsrichtung umschließt und der mit dem zumindest einen Halteabschnitt von einer radialen Außenseite in den Ringspalt ragt. Der Bügel liegt beispielsweise in einer in Umfangsrichtung verlaufenden Nut, in der der Bügel sicher gehalten ist. Insbesondere kann das Verriegelungselement ein Metallbügel sein, der einfach herzustellen ist und eine lange Lebensdauer aufweist.

Beispielsweise ist das Verriegelungselement zwischen einer Montageposition, in der der zumindest eine Halteabschnitt nicht oder nur soweit in den Ringspalt eingreift, dass er nicht mit der Haltegeometrie des Anschlussstutzens zusammenwirkt, und einer Verriegelungsposition bewegbar, in der der zumindest eine Halteabschnitt in den Ringspalt eingreift.

Vorzugsweise weist das Verriegelungselement zumindest zwei, insbesondere in Umfangsrichtung gleichmäßig verteilt angeordnete, Halteabschnitte auf. Der Verbinder wird in Umfangsrichtung gleichmäßig verteilt am Anschlussstutzen gehalten, so dass ein Kippen des Verbinders, beispielsweise bei einer außermittig auf den Verbinder wirkenden Zugkraft, verhindert ist.

Die Halteabschnitte, insbesondere das gesamte Verriegelungselement, können zwischen einer Montageposition, in der die Halteabschnitte nicht in den Ringspalt ragen, und einer Verriegelungsposition, in der die Halteabschnitte in den Ringspalt ragen, bewegbar sein. Beispielsweise können am Verriegelungsgehäuse Rampen oder Führungsmittel vorgesehen sein, die die Halteabschnitte bei einer Bewegung von der Verriegelungsposition in die Montageposition aus dem Ringspalt drängen, wodurch die Fixierung des Anschlussstutzens aufgehoben ist und der Verbinder einfach vom Anschlussstutzen abgezogen werden kann. Vorzugsweise kann das Verriegelungselement werkzeuglos zwischen der Montageposition und der Verriegelungsposition bewegt werden.

Insbesondere kann der Verriegelungsbügel symmetrisch ausgebildet sein, beispielsweise bezüglich einer senkrecht auf der Längsachse stehenden Symmetrieebene spiegelbildlich oder bezüglich der Längsachse punktsymmetrisch.

Das Verbindungsgehäuse kann beispielsweise ein Stopfen sein, durch den der Anschlussstutzen verschlossen wird.

Der Fluidkanal von sich aber auch von der ersten Öffnung zu einer zweiten Öffnung erstrecken. An der zweiten Öffnung kann eine Aufnahmegeometrie für eine Rohrleitung oder ein anderes Bauteil zur Fortführung des Fluidkanals vorgesehen sein. Die Aufnahmegeometrie kann eine Tannenbaumstruktur oder eine andere geeignete Struktur zur Aufnahme und Fixierung einer Rohrleitung aufweisen. Alternativ kann auch an der zweiten Öffnung eine Verriegelungsvorrichtung vorgesehen sein.

Zur Lösung der Aufgabe ist des Weiteren eine Verbinderbaugruppe für eine Fluidleitung vorgesehen, mit einem vorgehend beschriebenen Verbinder und mit einem Anschlussstutzen, der einen in Umfangsrichtung umlaufenden Verbinderabschnitt aufweist, wobei der Verbinderabschnitt in den Ringspalt ragt und zumindest eine Haltegeometrie aufweist, die mit dem zumindest einen Halteabschnitt des Verriegelungselements zusammen wirkt und den Verbinder und den Anschlussstutzen zumindest in Längsrichtung des Fluidkanals relativ zueinander fixiert.

Der Verbinder wird mit dem Ringspalt auf den Anschlussstutzen aufgeschoben. Anschließend wird der Verbinder am Anschlussstutzen fixiert, indem der zumindest eine Halteabschnitt mit der Haltegeometrie in Eingriff gebracht wird. Eine Demontage des Verbinders ist möglich, indem der Halteabschnitt gegen die Federkraft aus dem Eingriff mit der Haltegeometrie bewegt wird, wodurch der Verbinder nicht mehr am Anschlussstutzen fixiert ist und von diesem in Längsrichtung abgezogen werden kann.

Die Haltegeometrie ist vorzugsweise in Umfangsrichtung umlaufend in Form einer Vertiefung oder eines Kragens ausgebildet, so dass der Verbinder in beliebiger Orientierung auf den Verbinderabschnitt aufgesetzt werden kann.

Das freie Ende des Verbinderabschnitts kann zum freien Ende hin konisch zulaufend ausgebildet sein, wobei insbesondere die Außenfläche des freien Endes ebenfalls konisch zulaufend ausgebildet ist.

Zur Lösung der Aufgabe ist des Weiteren ein Verfahren zur Herstellung eines vorstehend beschriebenen Verbinders vorgesehen, das die folgenden Schritte aufweist:
a) Bereitstellen eines Verbindergehäuses mit zumindest einer auf der Außenseite des Verbindergehäuses (30) in Umfangsrichtung um das Verbindergehäuse umlaufende, radial nach außen vorstehende vorgesehenen Dichtung, wobei die Dichtung im Ringspalt angeordnet ist, wobei die Dichtung insbesondere in einer in Umfangsrichtung umlaufenden Nut angeordnet ist,
b) Bereitstellen einer Verriegelungsvorrichtung mit einem Verriegelungsgehäuse und einem Verriegelungselement,
c) stoff- und/oder formschlüssiges Verbinden des Verriegelungsgehäuses mit dem Verbindergehäuse, so dass zwischen dem Verbindergehäuse und dem Verriegelungsgehäuse ein zur ersten Öffnung offener, in Umfangsrichtung umlaufender Ringspalt zur Aufnahme eines im Wesentlichen zylindrischen Anschlussstutzens gebildet ist.

Da die Bauteile des Verbinders einzeln hergestellt werden, ist eine einfachere Herstellung des Verbinders möglich. Insbesondere können die einzelnen Bauteile einfacher hergestellt werden, da die einzelnen Bauteile jeweils eine einfachere Geometrie aufweisen und insbesondere weniger Hinterschnitte und Aussparungen aufweisen. Des Weiteren können für die einzelnen Bauteile jeweils unterschiedliche Materialien verwendet werden, so dass die einzelnen Bauteile besser an die jeweilige Belastung angepasst werden können.

Nach dem Verbinden des Verriegelungsgehäuses mit dem Verbindergehäuse wird vorzugsweise am Verbindergehäuse eine in Umfangsrichtung um das Verbindergehäuse umlaufende, radial nach außen vorstehende Dichtung im Ringspalt angeordnet, wobei die Dichtung insbesondere in einer in Umfangsrichtung umlaufenden Nut angeordnet wird.

Weitere Merkmale, Einzelheiten und Vorteile der Erfindung ergeben sich aus dem Wortlaut der Ansprüche sowie aus der folgenden Beschreibung eines Ausführungsbeispiels anhand der Zeichnungen. Es zeigen:
- Fig. 1: Eine erste Schnittansicht durch eine erfindungsgemäße Verbinderbaugruppe;
- Fig. 2: Eine zweite Schnittansicht durch die Verbinderbaugruppe aus Figur 1;
- Fig. 3: Eine Schnittansicht durch den Verbinder der Verbinderbaugruppe aus Figur 1;
- Fig. 4: eine erste perspektivische Ansicht des Verbinders der Verbinderbaugruppe aus Figur 1;
- Fig. 5: eine zweite perspektivische Ansicht des Verbinders der Verbinderbaugruppe aus Figur 1; und
- Fig. 6: eine dritte perspektivische Ansicht des Verbinders der Verbinderbaugruppe aus Figur 1.

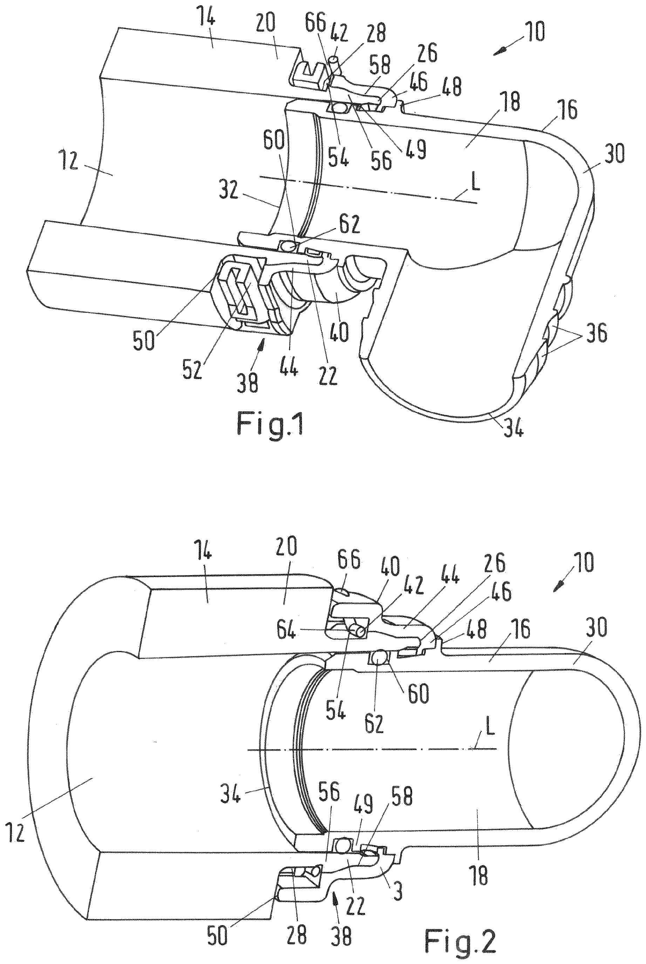

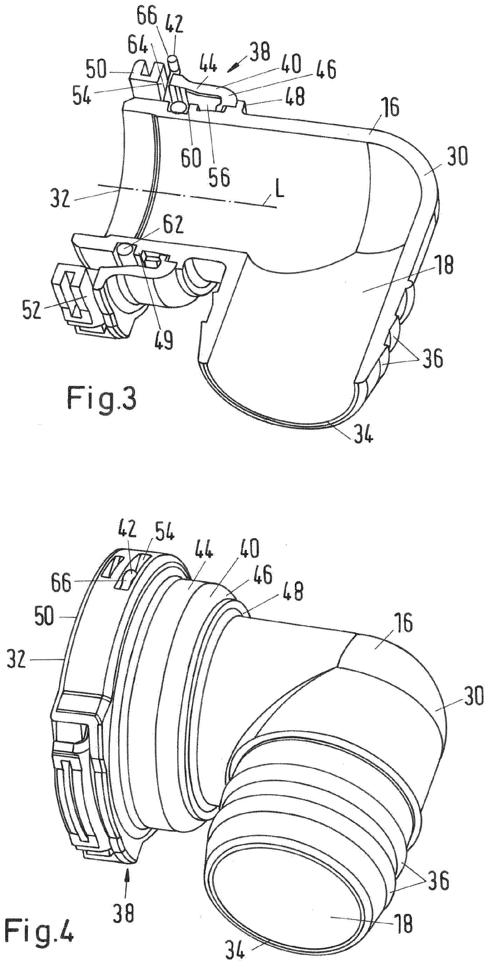

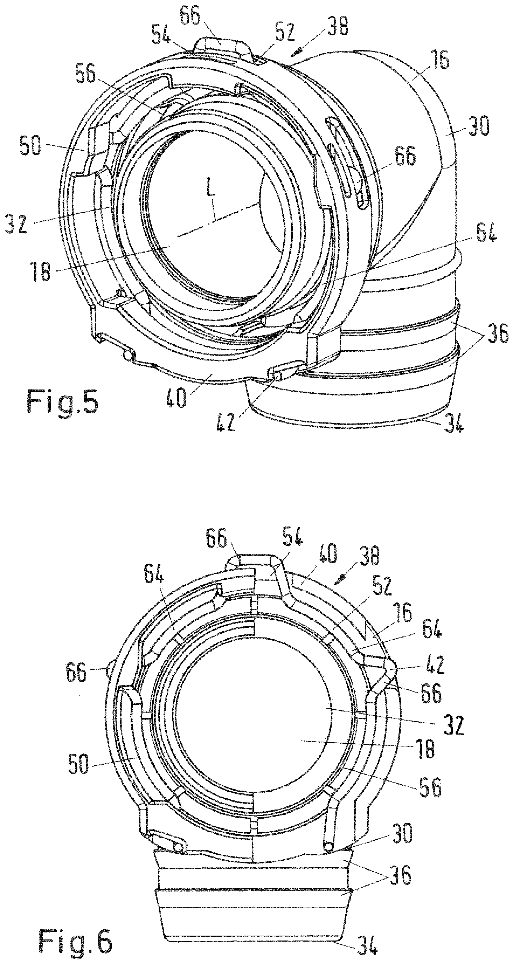

In den Figuren 1 und 2 ist eine Verbinderbaugruppe 10 für eine Fluidleitung 12 mit einem Anschlussstutzen 14 und einem in den Figuren 3 bis 6 im Detail gezeigten Verbinder 16 gezeigt. Die Fluidleitung 12 erstreckt sich vom Anschlussstutzen 14 durch einen im Verbinder 16 ausgebildeten Fluidkanal 18 und eine hier nicht dargestellte, am Verbinder 16 befestigte Rohrleitung.

Die Verbinderbaugruppe 10 wird beispielsweise im Kfz-Bereich, insbesondere für Nutzfahrzeuge, zum Transport von gasförmigen oder flüssigen, unter Druck stehenden Fluiden verwendet. Es sind aber auch andere Anwendung möglich, bei denen eine Fluidleitung 12 für ein insbesondere unter Druck stehendes Fluid erforderlich ist.

Der Anschlussstutzen 14 hat einen Grundkörper 20 sowie einen Verbinderabschnitt 22, der im Wesentlichen zylindrisch ausgebildet ist. Der Anschlussstutzen 14 hat am Übergang zum Verbinderabschnitt 22 einen bezüglich der Längsachse des Verbinderabschnitts radial abstehenden, umlaufenden Absatz 24, der durch eine Außenfläche des Anschlussstutzens 14 gebildet ist. Das freie Ende 26 des Verbinderabschnitts 22 hat eine zum freien Ende 26 konisch zulaufende Außenseite 27. Zwischen dem konisch zulaufenden Abschnitt und dem Absatz 24 ist eine bezüglich der Längsrichtung L in Umfangsrichtung umlaufende, als Nut ausgebildete Haltegeometrie 28 vorgesehen.

Der Verbinder 16 hat ein Verbindergehäuse 30, in dem sich der Fluidkanal 18 zwischen einer ersten Öffnung 32 und einer zweiten Öffnung 34 erstreckt. Die an die Öffnungen 32, 34 anschließenden Abschnitte des Verbindergehäuses 30 bzw. des Fluidkanals sind zum Einschieben in den Anschlussstutzen 14 geradlinig ausgebildet. Das Verbindergehäuse 30 ist in der gezeigten Ausführungsform derart ausgebildet, dass der Fluidkanal 18 abknickt und die Ebenen der ersten Öffnung 32 und der zweiten Öffnung 34 im Wesentlichen rechtwinklig zueinander angeordnet sind. Es sind aber auch andere Verläufe des Fluidkanals 18 möglich. Insbesondere kann der Fluidkanal 18 auch geradlinig oder gebogen verlaufen. Das Verbindergehäuse 30 kann auch so ausgebildet sein, dass der Verlauf des Fluidkanals 18 angepasst werden kann, beispielsweise, indem das Verbindergehäuse 30 einen flexiblen Abschnitt oder ein Gelenk aufweist.

Der Verbinder 16 kann den Anschlussstutzen 14 mit einem anderen, die Fluidleitung 12 fortsetzenden Bauteil, beispielsweise einer Rohrleitung, einem Schlauch oder einem weiteren Anschlussstutzen, verbinden. Alternativ sind auch Ausführungsformen eines Verbinders 16 mit nur einer Öffnung 32 möglich, die auf den Anschlussstutzen 14 aufgesteckt wird. Der Verbinder 16 dient in einer solchen Ausführungsform als Stopfen zum Verschluss des Anschlussstutzens 14.

Im Bereich der zweiten Öffnung 34 ist eine Aufnahmegeometrie 36 für eine Rohrleitung, beispielsweise eine flexible Leitung, vorgesehen, die in der hier gezeigten Ausführungsform durch eine Tannenbaumstruktur gebildet ist. Die Leitung wird auf die Aufnahmegeometrie 36 aufgeschoben und auf dieser, beispielsweise durch ein zusätzliches Halteelement wie eine Spannschelle, fixiert.

An der ersten Öffnung 32 ist eine Verriegelungsvorrichtung 38 vorgesehen, um den Verbinder 16 am Anschlussstutzen 14 zu fixieren. Die Verriegelungsvorrichtung 38 hat ein im Wesentlichen ringförmig ausgebildetes Verriegelungsgehäuse 40 sowie ein Verriegelungselement 42, das als Bügel ausgebildet ist.

Das Verriegelungsgehäuse 40 hat einen im Wesentlichen zylindrischen Bereich 44 sowie an dem der ersten Öffnung 32 abgewandten Ende einen radial nach innen ragenden Kragen 46, mit dem das Verriegelungsgehäuse 40 am Verbindergehäuse 30 anliegt. Am Verbindergehäuse 30 ist zumindest ein umlaufender Vorsprung 48 vorgesehen, an dem der Kragen 46 anliegt, so dass die Lage des Verriegelungsgehäuses 40 in Längsrichtung L des Fluidkanals 18 durch Formschluss am Verbindergehäuse 30 definiert ist. Am Verriegelungsgehäuse 40 oder am Verbindergehäuse 30 sind beispielsweise Rastlaschen und am Verbindergehäuse 30 bzw. am Verriegelungsgehäuse 40 Rastvorsprünge vorgesehen, an denen die Rastlaschen in Längsrichtung L verrasten, wobei die Rastvorsprünge insbesondere durch einen in Umfangsrichtung umlaufenden Flansch 49 gebildet sind.

In Umfangsrichtung ist das Verriegelungsgehäuse 40 relativ zum Verbindergehäuse 30 drehbar. Der zylindrische Bereich 44 des Verriegelungsgehäuses 40 umschließt das Verbindergehäuse 30 im Bereich der Öffnung 32 insbesondere konzentrisch. Optional können auch Mittel vorgesehen sein, um das Verriegelungsgehäuses 40 in Umfangsrichtung am Verbindergehäuse 30 festzulegen, beispielsweise axiale vorstehenden, zusammenwirkende Verzahnungen am Verriegelungsgehäuse 40 und am Verbindergehäuse 30.

Am zylindrischen Bereich 44 ist eine in Umfangrichtung umlaufende, nutartig ausgebildete Aufnahme 52 vorgesehen, die mehrere in Umfangsrichtung verteilt angeordnete Aussparungen 54 aufweist.

Das Verriegelungsgehäuse 40 ist so am Verbindergehäuse 30 fixiert, dass zwischen dem Verbindergehäuse 30 und dem Verriegelungsgehäuse 40 ein sich von der ersten Öffnung weg bis zum Kragen 46 erstreckender, in Umfangsrichtung um das Verbindergehäuse 30 umlaufender Ringspalt 56 gebildet ist, der zur Aufnahme eines Endes des Anschlussstutzens 14 dient. Der Ringspalt 56 verjüngt sich in Längsrichtung L des Fluidkanals 18 von der ersten 32 Öffnung weg, wobei die dem Verbindergehäuse 30 zugewandte Innenseite des Verriegelungsgehäuses 40 an einem dem Kragen 46 benachbarten Abschnitt 58 von der ersten Öffnung 32 weg konisch verjüngend ausgebildet ist. Im Ringspalt 56 ist am Verbindergehäuse 30 eine Nut 60 vorgesehen in der eine radial nach außen über die Außenfläche des Verbindergehäuses 30 vorstehende, in Umfangsrichtung umlaufende Dichtung 62 angeordnet ist.

Das als Bügel ausgebildete Verriegelungselement 42 ist in der Aufnahme52 angeordnet und weist mehrere Halteabschnitt 64 auf, die elastisch federnd in den Ringspalt 56 ragen. Zwischen den Halteabschnitten 64 sind Verbindungsabschnitte 66 vorgesehen, die durch die Aussparungen 54 aus dem Ringspalt 56 ragen. Der Bügel ist beispielsweise aus Metall oder einem andere elastisch verformbaren Material hergestellt. Die Halteabschnitte 64 werden federnd in den Ringspalt 56 beaufschlagt und können vorzugsweise gegen die Federkraft aus dem Ringspalt 56 bewegt werden.

Das Verriegelungselement 42 ist beispielsweise symmetrisch ausgebildet. In der hier gezeigten Ausführungsform ist das Verriegelungselement 42 bezüglich einer senkrecht zur Längsrichtung L angeordneten Symmetrieebene spiegelbildlich ausgebildet. Es ist aber auch möglich, dass das Verriegelungselement 42 bezüglich der Längsrichtung L punktsymmetrisch ausgebildet ist.

Beispielsweise sind am Verriegelungsgehäuse 40 eine Montageposition und eine Verriegelungsposition für das Verriegelungselement 42 vorgesehen. In der Montageposition ragen die Halteabschnitte 64 nicht beziehungsweise nur soweit in den Ringspalt 56, dass sie außer Eingriff mit der Haltegeometrie 28 des Anschlussstutzens 14 gelangen. In der Verriegelungsposition ragen die Halteabschnitte 64 in den Ringspalt 56. Vorzugsweise sind am Verriegelungsgehäuse 40 Rampen vorgesehen, die die Halteabschnitte 64 bei einer Bewegung des Verriegelungselements 42 von der Verriegelungsposition in die Montageposition aus dem Ringspalt 56 drängen. Beispielsweise kann an zumindest einem Verbindungsabschnitt 66 ein Werkzeug angesetzt werden, um das Verriegelungselements 42 von der Verriegelungsposition in die Montageposition oder zumindest einen oder mehrere Halteabschnitte 64 aus dem Ringspalt 56 zu bewegen.

Zur Montage der Verbinderbaugruppe 10 wird der Verbinderabschnitt 22 des Anschlussstutzens 14 in den Ringspalt 56 eingeschoben. Die Halteabschnitte 64 des Verriegelungselements 42 ragen dabei nicht hindernd in den Ringspalt 56 und können gegebenenfalls durch den Anschlussstutzen 14 radial nach außen bewegt werden. Die konisch zulaufenden Flächen des Verbinderabschnitts 22 unterstützen dies Die Dichtung 62 liegt in Umfangsrichtung umlaufend an der Innenfläche des Verbinderabschnitts 22 an, zentriert den Verbinder 16 auf dem Anschlussstutzen 14 und dichtet den Verbinder 16 gegen den Anschlussstutzen 14 ab. Wie in Figur 1 zu sehen ist, befindet sich die Haltegeometrie 28 bezüglich der Längsrichtung L in radialer Richtung zwischen den Aussparungen 54 des Verriegelungsgehäuses 40. Anschließend können die Halteabschnitte 64 des Verriegelungselements 42 in die Aussparung 54 bewegt werden, so dass diese in den Ringspalt 56 und mit der Haltegeometrie 28 zusammenwirken und ein Herausziehen des Verbinderabschnitts 22 aus dem Ringspalt 56 verhindern.

Da die Haltegeometrie 28 umlaufend ausgebildet ist, kann der Verbinder zu Ausrichtung der zweiten Öffnung 34 um die Längsrichtung L gedreht werden. Des Weiteren kann das Verriegelungsgehäuse 40 zumindest vor der Montage des Verriegelungsgehäuses 40 am Verbindergehäuse 30 gedreht bzw. ausgerichtet werden, beispielsweise um die Erreichbarkeit des Verriegelungselements 42 zu verbessern. Sind am Verbinderabschnitt 22 des Anschlussstutzens 14 nur einzelne Haltegeometrien für die Halteabschnitte 64 des Verriegelungselements 42 vorgesehen, ist zudem eine Ausrichtung der Aussparungen 54 zu den Haltegeometrien durch Drehen des Verriegelungsgehäuse 40 möglich, wobei das Verriegelungsgehäuse 40 unabhängig vom Verbindergehäuse 30 ausgerichtet werden kann.

Zum Lösen der Verbindung kann das Verriegelungselement 42 in die Montageposition bewegt werden, wodurch die Halteabschnitte 64 radial nach außen bewegt werden und der Verbinderabschnitt 22 in Längsrichtung L nicht durch diese fixiert ist. Dafür können Enden des Verriegelungselements 42 auf Rampen geführt sein, die beim Herausziehen des Verriegelungselements 42 ein radiales Aufweiten bewirken.

Wie in den Figuren 3 und 4 zu sehen ist, sind am öffnungsseitigen Ende 50 des Verriegelungsgehäuses 40 radial nach innen ragende Verstärkungen 68 vorgesehen, an denen das Verriegelungselement 42, insbesondere mit den Verbindungsabschnitten 66, in Längsrichtung L anliegt. Die Verstärkungen 68 verbessern die Stabilität des Verriegelungsgehäuses 40, so dass eine bessere Lastübertragung vom Verriegelungselement 42 auf das Verriegelungsgehäuse 40 erfolgt. Unabhängig davon kann das öffnungsseitige Ende 50 beliebig ausgestaltet sein, solange eine ausreichende Kraftübertragung zwischen dem Verriegelungselement 42 und dem Verriegelungsgehäuse 40 sichergestellt ist. Beispielsweise könnten auch am Anschlussstutzen 14 und am Verriegelungsgehäuse 40 zusammenwirkende Geometrien oder Elemente vorgesehen sein, die ein Verdrehen des Verriegelungsgehäuses 40 relativ zum Anschlussstutzen 14 verhindern oder begrenzen oder die, beispielswiese, wenn mehrere Anschlussstutzen 14 und mehrere verschiedene Verbinder 16 für verschiedene Fluide vorgesehen sind, sicherstellen, dass ein Verbinder 16 nur auf bestimmte Anschlussstutzen 14 aufgesetzt werden kann.

Die Erfindung ist nicht auf eine der vorbeschriebenen Ausführungsformen beschränkt, sondern in vielfältiger Weise abwandelbar.

Beispielsweise kann das Verriegelungsgehäuse 40 am Verbindergehäuse 30 auf beliebige Weise form- und/oder stoffschlüssig am Verbindergehäuse 30 fixiert sein, solange eine Fixierung zumindest in Längsrichtung L des Fluidkanals 18 erfolgt.

Durch die sich konisch verjüngenden Abschnitte kann eine bessere Klemmwirkung zwischen der Verriegelungsvorrichtung 38 und dem Verbinderabschnitt 22 erreicht werden. Zudem können solche konischen Abschnitte das Einführen des Verbinderabschnitts 22 erleichtern. Es sind aber auch Ausführungsformen ohne sich verjüngende Abschnitte möglich.

Das Verriegelungsgehäuse 40 und die erste Öffnung 32 müssen auch nicht in einer Ebene liegen. Es ist auch möglich, dass das Verriegelungsgehäuse 40 oder die erste Öffnung 32 in Längsrichtung über das jeweils andere vorsteht.

Insbesondere können auch an beiden Öffnungen 32, 34 Verriegelungsvorrichtungen 38 vorgesehen sein.

In einer alternativen Ausführungsform können die Halteabschnitte 64 bereits vor der Montage in den Ringspalt 56 ragen und werden beim Einschieben des Verbinderabschnitts 22 von einem konisch zulaufenden Abschnitt radial nach außen gedrängt. Ist der Verbinderabschnitt 22 vollständig in den Ringspalt 56 eingeschoben, können die Halteabschnitte 64 in die dann auf Höhe der Halteabschnitte 64 liegenden Haltegeometrie in Form von Vertiefungen zurück federn und in diesen einrasten. Zur Demontage der Verbinderbaugruppe 10 ist vorzugsweise weiterhin eine Montageposition des Verriegelungselements 42 vorgesehen, in der die Halteabschnitte 64 nicht in den Ringspalt 56 ragen. Gegebenenfalls kann das Verriegelungselement 42 dabei durch Anlegen einer äußeren Kraft in der Montagestellung gehalten werden, bis der Anschlussstutzen aus dem Ringspalt herausgezogen ist. Bei Ausbleiben bzw. Entfernen dieser Kraft bewegt sich das Verriegelungselement dann insbesondere selbstständig wieder zurück in die Verrieglungsposition.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 10 | Verbinderbaugruppe | 40 | Verriegelungsgehäuse |
| 12 | Fluidleitung | 42 | Verriegelungselement |
| 14 | Anschlussstutzen | 44 | zylindrischer Bereich |
| 16 | Verbinder | 46 | Kragen |
| 18 | Fluidkanal | 48 | Vorsprung |
| 20 | Grundkörper | 49 | Flansch |
| 22 | Verbinderabschnitt | 50 | öffnungsseitiges Ende des Verriegelungsgehäuses |
| 24 | Absatz | | |
| 26 | freies Ende | 52 | Aufnahme |
| 27 | konisch zulaufende Außenseite | 54 | Aussparung |
| 28 | Haltegeometrie | 56 | Ringspalt |
| 30 | Verbindergehäuse | 58 | konisch verjüngender Abschnitt |
| 32 | erste Öffnung des Verbindergehäuses | 60 | Nut |
| | | 62 | Dichtung |
| 34 | zweite Öffnung des Verbindergehäuses | 64 | Halteabschnitt |
| | | 66 | Verbindungsabschnitt |
| 36 | Aufnahmegeometrie | | |
| 38 | Verriegel ungsvorrichtu ng | L | Längsrichtung des Fluidkanals |

## Patentansprüche

1. Verbinder (16) für eine Fluidleitung (12) mit einem Verbindergehäuse (30), das einen sich von einer ersten Öffnung (32) weg erstreckenden Fluidkanal (18) aufweist, wobei im Bereich der ersten Öffnung (32) eine Verriegelungsvorrichtung (38) mit einem Verriegelungsgehäuse (40) und einem Verriegelungselement (42) vorgesehen ist, wobei das Verriegelungsgehäuse (40) das Verbindergehäuse (30) bezüglich des Fluidkanals (18) in Umfangsrichtung so umschließt, dass zwischen dem Verbindergehäuse (30) und dem Verriegelungsgehäuse (40) ein die erste Öffnung (32) insbesondere konzentrisch umgebender Ringspalt (56) zur Aufnahme eines im wesentlichen zylindrischen Anschlussstutzens (14) gebildet ist, und wobei das Verriegelungselement (42) mit zumindest einem Halteabschnitt (64) elastisch federnd in den Ringspalt (56) ragt, wobei das Verriegelungsgehäuse (40) ein vom Verbindergehäuse (30) separates Bauteil ist, das zumindest in Längsrichtung (L) des Fluidkanals (18) im Bereich der ersten Öffnung (32) am Verbindergehäuse (30) gehalten ist, **dadurch gekennzeichnet, dass** auf der Außenseite des Verbindergehäuses (30) zumindest eine in Umfangsrichtung um das Verbindergehäuse (30) umlaufende, radial nach außen vorstehende Dichtung (62) vorgesehen ist, wobei die Dichtung (62) im Ringspalt (56) angeordnet ist, wobei die Dichtung (62) insbesondere in einer in Umfangsrichtung umlaufenden Nut (60) angeordnet ist.

2. Verbinder nach Anspruch 1, **dadurch gekennzeichnet, dass** die Verbindung eine Verrastung ist, wobei am Verriegelungsgehäuse (40) oder am Verbindergehäuse (30) Rastlaschen vorgesehen sind und am Verbindergehäuse (30) bzw. am Verriegelungsgehäuse (40) Rastvorsprünge vorgesehen sind, an denen die Rastlaschen in Längsrichtung (L) verrasten, wobei die Rastvorsprünge insbesondere durch einen in Umfangsrichtung umlaufenden Flansch (49) gebildet sind.

3. Verbinder nach einem der vorhergehenden Ansprüche, **dadurch gekennzeichnet, dass** Mittel zur Festlegung des Verriegelungsgehäuses (40) am Verbindergehäuse (30) in Umfangsrichtung vorgesehen sind, insbesondere am Verriegelungsgehäuse (40) und am Verbindergehäuse (30) vorgesehene, ineinandergreifende Verzahnungen.

4. Verbinder nach einem der vorhergehenden Ansprüche, **dadurch gekennzeichnet, dass** das Verriegelungsgehäuse (40) an einem der ersten Öffnung (32) des Fluidkanals (18) abgewandten Ende einen radial nach innen ragenden Kragen (46) aufweist, der insbesondere am Verbindergehäuse (30) fixiert ist.

5. Verbinder nach einem der vorhergehenden Ansprüche, **dadurch gekennzeichnet, dass** sich der Ringspalt (56) in Längsrichtung (L) des Fluidkanals (18) von der ersten Öffnung (32) weg zumindest abschnittsweise verjüngt.

6. Verbinder nach einem der vorhergehenden Ansprüche, **dadurch gekennzeichnet, dass** die dem Verbindergehäuse (30) zugewandte Innenseite des Verriegelungsgehäuses (40) zumindest abschnittsweise sich von der ersten Öffnung (32) weg konisch verjüngend ausgebildet ist.

7. Verbinder nach einem der vorhergehenden Ansprüche, **dadurch gekennzeichnet, dass** das Verbindergehäuse (30) zylindrisch und das Verriegelungselement (42) teilringförmig, ringförmig oder insbesondere U-förmig ausgebildet sind.

8. Verbinder nach einem der vorhergehenden Ansprüche, **dadurch gekennzeichnet, dass** das Verriegelungselement (42) ein Bügel, insbesondere ein Metallbügel, ist, der das Verriegelungsgehäuse (40) zumindest abschnittsweise in Umfangsrichtung umschließt und mit dem zumindest einen Halteabschnitt (64) von einer radialen Außenseite in den Ringspalt (56) ragt.

9. Verbinder nach einem der vorhergehenden Ansprüche, **dadurch gekennzeichnet, dass** das Verriegelungselement (42) zumindest zwei, insbesondere in Umfangsrichtung gleichmäßig verteilt angeordnete, Halteabschnitte (64) aufweist.

10. Verbinder nach einem der vorhergehenden Ansprüche, **dadurch gekennzeichnet, dass** die Halteabschnitte (64), insbesondere das Verriegelungselement (42), zwischen einer Montageposition, in der die Halteabschnitte (64) nicht in den Ringspalt (56) ragen, und einer Verriegelungsposition, in der die Halteabschnitte (64) nicht in den Ringspalt (56) ragen, bewegbar ist.

11. Verbinder nach einem der vorhergehenden Ansprüche, **dadurch gekennzeichnet, dass** sich der Fluidkanal (18) von der ersten Öffnung (32) zu einer zweiten Öffnung (34) erstreckt.

12. Verbinderbaugruppe (10) für eine Fluidleitung, mit einem Verbinder (16) nach einem der vorhergehenden Ansprüche und mit einem Anschlussstutzen (14), der einen in Umfangsrichtung umlaufenden Verbinderabschnitt (22) aufweist, wobei der Verbinderabschnitt (22) in den Ringspalt (56) ragt und zumindest eine Haltegeometrie (28) aufweist, mit der die zumindest eine Halteabschnitt (64) des Verriegelungselements (42) zusammenwirkt und den Verbinder (16) und den Anschlussstutzen (14) zumindest in Längsrichtung (L) des Fluidkanals (18) relativ zueinander hält.

13. Verbinderbaugruppe nach Anspruch 12, **dadurch gekennzeichnet, dass** das freie Ende (26) des Verbinderabschnitts (22) konisch zum freien Ende (26) hin konisch zulaufend ausgebildet ist, wobei insbesondere die Außenfläche des freien Endes (26) konisch zulaufend ausgebildet ist.

14. Verfahren zur Herstellung eines Verbinders (16) nach einem der Ansprüche 1 bis 11 mit folgenden Schritten:
a) Bereitstellen eines Verbindergehäuses (30) mit zumindest einer auf der Außenseite des Verbindergehäuses (30) in Umfangsrichtung um das Verbindergehäuse (30) umlaufende, radial nach außen vorstehende vorgesehenen Dichtung (62), wobei die Dichtung (62) im Ringspalt (56) angeordnet ist, wobei die Dichtung (62) insbesondere in einer in Umfangsrichtung umlaufenden Nut (60) angeordnet ist,
b) bereitstellen einer Verriegelungsvorrichtung (38) mit einem Verriegelungsgehäuse (40) und einem Verriegelungselement (42),
c) stoff- und/oder formschlüssiges Verbinden des Verriegelungsgehäuses (40) mit dem Verbindergehäuse (30), so dass zwischen dem Verbindergehäuse (30) und dem Verriegelungsgehäuse (40) ein zur ersten Öffnung (32) offener, in Umfangsrichtung umlaufender Ringspalt (56) zur Aufnahme eines im Wesentlichen zylindrischen Anschlussstutzens (14) gebildet ist.

15. Verfahren nach Anspruch 14, **dadurch gekennzeichnet, dass** nach dem Verbinden des Verriegelungsgehäuses (40) mit dem Verbindergehäuse (30) am Verbindergehäuse (30) eine in Umfangsrichtung um das Verbindergehäuse (30) umlaufende, radial nach außen vorstehende Dichtung (62) im Ringspalt (56) angeordnet wird, wobei die Dichtung (62) insbesondere in einer in Umfangsrichtung umlaufenden Nut (60) angeordnet wird.

## Claims

1. Connector (16) for a fluid line (12) comprising a connector housing (30), which has a fluid channel (18) extending away from a first opening (32), wherein a locking device (38) with a locking housing (40) and a locking element (42) is provided in the region of the first opening (32), wherein the locking housing (40) surrounds the connector housing (30) circumferentially with respect to the fluid channel (18) in such a way that an annular gap (56) surrounding the first opening (32), in particular concentrically, is formed between the connector housing (30) and the locking housing (40) for receiving a substantially cylindrical connection support (14), and wherein the locking element (42) projects elastically resiliently with at least one retaining portion (64) into the annular gap (56), wherein the locking housing (40) is a component separate from the connector housing (30), which is held on the connector housing (30) at least in the longitudinal direction (L) of the fluid channel (18) in the region of the first opening (32), **characterised in that** at least one radially outwardly projecting seal (62) is provided on the outer side of the connector housing (30), which extends around the connector housing (30) circumferentially, wherein the seal (62) is arranged in the annular gap (56), wherein the seal (62) is arranged in particular in a circumferentially extending groove (60).

2. Connector according to claim 1, **characterised in that** the connection is a latching connection, latching tabs being provided on the locking housing (40) or on the connector housing (30) and latching projections being provided on the connector housing (30) or on the locking housing (40), on which latching projections the latching tabs latch in the longitudinal direction (L), wherein the latching projections are formed in particular by a circumferentially extending flange (49).

3. Connector according to any one of the preceding claims, **characterised in that** means are provided for fixing the locking housing (40) on the connector housing (30) in the circumferential direction, in particular interlocking teeth provided on the locking housing (40) and on the connector housing (30).

4. Connector according to any one of the preceding claims, **characterised in that** the locking housing (40) has, at an end facing away from the first opening (32) of the fluid channel (18), a radially inwardly projecting collar (46), which in particular is fixed to the connector housing (30).

5. Connector according to any one of the preceding claims, **characterised in that** the annular gap (56) at least in portions tapers in the longitudinal direction (L) of the fluid channel (18) away from the first opening (32).

6. Connector according to any one of the preceding claims, **characterised in that** the inner side of the locking housing (40) facing the connector housing (30) is at least in portions conically tapered away from the first opening (32).

7. Connector according to any one of the preceding claims, **characterised in that** the connector housing (30) is cylindrical and the locking element (42) is partially annular, ringshaped or in particular U-shaped.

8. Connector according to any one of the preceding claims, **characterised in that** the locking element (42) is a clip, in particular a metal clip, which at least in portions surrounds the locking housing (40) circumferentially and projects with the at least one retaining portion (64) from a radially outer side into the annular gap (56).

9. Connector according to any one of the preceding claims, **characterised in that** the locking element (42) has at least two retaining portions (64), which are in particular circumferentially evenly distributed.

10. Connector according to any one of the preceding claims, **characterised in that** the retaining portions (64), in particular the locking element (42), can be moved between an assembly position, in which the retaining portions (64) do not project into the annular gap (56), and a locking position, in which the retaining portions (64) do not project into the annular gap (56).

11. Connector according to any one of the preceding claims, **characterised in that** the fluid channel (18) extends from the first opening (32) to a second opening (34).

12. Connector assembly (10) for a fluid line, comprising a connector (16) according to any one of the preceding claims, and a connection support (14) having a circumferentially extending connector portion (22), wherein the connector portion (22) projects into the annular gap (56) and has at least one retaining geometry (28) with which the at least one retaining portion (64) of the locking element (42) cooperates and holds the connector (16) and the connection support (14) relative to one another at least in the longitudinal direction (L) of the fluid channel (18).

13. Connector assembly according to claim 12, **characterised in that** the free end (26) of the connector portion (22) is conically tapered towards the free end (26), wherein in particular the outer surface of the free end (26) is conically tapered.

14. Method of producing a connector (16) according to any one of claims 1 to 11 comprising the following steps:
a) provision of a connector housing (30) with at least one radially outwardly projecting seal (62) extending circumferentially around the connector housing (30) on the outer side of the connector housing (30), wherein the seal (62) is arranged in the annular gap (56), wherein the seal (62) is arranged in particular in a circumferentially extending groove (60),
b) providing a locking device (38) with a locking housing (40) and a locking element (42),
c) material- and/or form-fitting connection of the locking housing (40) with the connector housing (30), so that an annular gap (56) open towards the first opening (32) and extending circumferentially is formed between the connector housing (30) and the locking housing (40) to receive a substantially cylindrical connection support (14).

15. Method according to claim 14, **characterised in that** after connection of the locking housing (40) with the connector housing (30), a radially outwardly projecting seal (62) which extends circumferentially around the connector housing (30) is arranged on the connector housing (30) in the annular gap (56), wherein the seal (62) is arranged in particular in a circumferentially extending groove (60).

## Revendications

1. Connecteur (16) pour une conduite de fluide (12) avec un boîtier de connecteur (30), qui présente un conduit de fluide (18) s'étendant à l'écart d'une première ouverture (32), dans lequel un dispositif de verrouillage (38) avec un boîtier de verrouillage (40) et un élément de verrouillage (42) est prévu dans la région de la première ouverture (32), dans lequel le boîtier de verrouillage (40) entoure le boîtier de connecteur (30) dans la direction périphérique par rapport au conduit de fluide (18), de sorte qu'un interstice annulaire (56) entourant en particulier concentriquement la première ouverture (32), destiné à recevoir une tubulure de raccordement (14) sensiblement cylindrique, est formé entre le boîtier de connecteur (30) et le boîtier de verrouillage (40), et dans lequel l'élément de verrouillage (42) fait saillie de manière élastique dans l'interstice annulaire (56) avec au moins une partie de retenue (64), dans lequel le boîtier de verrouillage (40) est un composant séparé du boîtier de connecteur (30), qui est retenu sur le boîtier de connecteur (30) dans la région de la première ouverture (32) au moins dans la direction longitudinale (L) du conduit de fluide (18), **caractérisé en ce qu'**au moins un joint d'étanchéité (62) faisant saillie radialement vers l'extérieur, s'étendant autour du boîtier de connecteur (30) dans la direction périphérique, est prévu sur la face extérieure du boîtier de connecteur (30), dans lequel le joint d'étanchéité (62) est disposé dans l'interstice annulaire (56), dans lequel le joint d'étanchéité (62) est disposé en particulier dans une rainure (60) s'étendant dans la direction périphérique.

2. Connecteur selon la revendication 1, **caractérisé en ce que** la liaison est un encliquetage, dans lequel des languettes d'encliquetage sont prévues sur le boîtier de verrouillage (40) ou sur le boîtier de connecteur (30) et des parties saillantes d'encliquetage, sur lesquelles les languettes d'encliquetage s'encliquètent dans la direction longitudinale (L), sont prévues sur le boîtier de connecteur (30) ou sur le boîtier de verrouillage (40), dans lequel les parties saillantes d'encliquetage sont formées en particulier par une bride (49) s'étendant dans la direction périphérique.

3. Connecteur selon l'une quelconque des revendications précédentes, **caractérisé en ce que** des moyens pour la fixation du boîtier de verrouillage (40) sur le boîtier de connecteur (30) sont prévus dans la direction périphérique, en particulier des dentures s'engrenant, prévues sur le boîtier de verrouillage (40) et sur le boîtier de connecteur (30).

4. Connecteur selon l'une quelconque des revendications précédentes, **caractérisé en ce que** le boîtier de verrouillage (40) présente à une extrémité opposée à la première ouverture (32) du conduit de fluide (18) une collerette (46) faisant saillie radialement vers l'intérieur, qui est fixée en particulier sur le boîtier de connecteur (30).

5. Connecteur selon l'une quelconque des revendications précédentes, **caractérisé en ce que** l'interstice annulaire (56) s'amincit au moins sur certaines parties dans la direction longitudinale (L) du conduit de fluide (18) à l'écart de la première ouverture (32).

6. Connecteur selon l'une quelconque des revendications précédentes, **caractérisé en ce que** la face intérieure du boîtier de verrouillage (40) tournée vers le boîtier de connecteur (30) est réalisée au moins sur certaines parties de manière à s'amincir de façon conique à l'écart de la première ouverture (32).

7. Connecteur selon l'une quelconque des revendications précédentes, **caractérisé en ce que** le boîtier de connecteur (30) est réalisé de manière cylindrique et l'élément de verrouillage (42) en forme d'anneau partiel, en forme d'anneau ou en particulier en forme de U.

8. Connecteur selon l'une quelconque des revendications précédentes, **caractérisé en ce que** l'élément de verrouillage (42) est un étrier, en particulier un étrier métallique, qui entoure le boîtier de verrouillage (40) au moins sur certaines parties dans la direction périphérique et fait saillie avec l'au moins une partie de retenue (64) d'une face extérieure radiale dans l'interstice annulaire (56).

9. Connecteur selon l'une quelconque des revendications précédentes, **caractérisé en ce que** l'élément de verrouillage (42) présente au moins deux parties de retenue (64), disposées de manière répartie uniformément en particulier dans la direction périphérique.

10. Connecteur selon l'une quelconque des revendications précédentes, **caractérisé en ce que** les parties de retenue (64), en particulier l'élément de verrouillage (42), est mobile entre une position de montage dans laquelle les parties de retenue (64) ne font pas saillie dans l'interstice annulaire (56), et une position de verrouillage, dans laquelle les parties de retenue (64) ne font pas saillie dans l'interstice annulaire (56).

11. Connecteur selon l'une quelconque des revendications précédentes, **caractérisé en ce que** le conduit de fluide (18) s'étend de la première ouverture (32) vers une seconde ouverture (34).

12. Ensemble de connecteur (10) pour une conduite de fluide, avec un connecteur (16) selon l'une quelconque des revendications précédentes et avec une tubulure de raccordement (14), qui présente une partie de connecteur (22) s'étendant dans la direction périphérique, dans lequel la partie de connecteur (22) fait saillie dans l'interstice annulaire (56) et présente au moins une géométrie de retenue (28), avec laquelle l'au moins une partie de retenue (64) de l'élément de verrouillage (42) coopère et retient le connecteur (16) et la tubulure de raccordement (14) l'un par rapport à l'autre au moins dans la direction longitudinale (L) du conduit de fluide (18).

13. Ensemble de connecteur selon la revendication 12, **caractérisé en ce que** l'extrémité libre (26) de la partie de connecteur (22) est réalisée de façon conique de manière à se terminer de façon conique en direction de l'extrémité libre (26), dans lequel en particulier la surface extérieure de l'extrémité libre (26) est réalisée de manière à se terminer de façon conique.

14. Procédé pour fabriquer un connecteur (16) selon l'une quelconque des revendications précédentes 1 à 11 avec les étapes suivantes :
a) la fourniture d'un boîtier de connecteur (30) avec au moins un joint d'étanchéité (62) prévu, s'étendant autour du boîtier de connecteur (30) dans la direction périphérique sur la face extérieure du boîtier de connecteur (30), faisant radialement saillie vers l'extérieur, dans lequel le joint d'étanchéité (62) est disposé dans l'interstice annulaire (56), dans lequel le joint d'étanchéité (62) est disposé en particulier dans une rainure (60) s'étendant dans la direction périphérique,
b) la fourniture d'un dispositif de verrouillage (38) avec un boîtier de verrouillage (40) et un élément de verrouillage (42),
c) la liaison de matières et/ou par coopération de formes du boîtier de verrouillage (40) au boîtier de connecteur (30), de sorte qu'un interstice annulaire (56) s'étendant dans la direction périphérique, ouvert vers la première ouverture (32), destiné à recevoir une tubulure de raccordement (14) sensiblement cylindrique, est formé entre le boîtier de connecteur (30) et le boîtier de verrouillage (40).

15. Procédé selon la revendication 14, **caractérisé en ce que**, après la liaison du boîtier de verrouillage (40) au boîtier de connecteur (30), un joint d'étanchéité (62) s'étendant dans la direction périphérique autour du boîtier de connecteur (30), faisant radialement saillie vers l'extérieur, est disposé dans l'interstice annulaire (56) sur le boîtier de connecteur (30), dans lequel le joint d'étanchéité (62) est disposé en particulier dans une rainure (60) s'étendant dans la direction périphérique.
